# EUROPEAN PATENT SPECIFICATION

(11) **EP 2 040 899 B1**
(45) Date of publication and mention of the grant of the patent: **14.05.2014**
(21) Application number: 07748249.5
(22) Date of filing: 15.06.2007
(51) Int. Cl.: B29C 45/14, B29C 45/72, B29C 65/40, B29C 65/70

(54) **METHOD AND DEVICE FOR INJECTION MOULDING A PACKAGING CONTAINER PORTION**
VERFAHREN UND VORRICHTUNG ZUM SPRITZGIESSEN EINES VERPACKUNGSBEHÄLTERABSCHNITTS
PROCÉDÉ ET DISPOSITIF DE MOULAGE PAR INJECTION D'UNE PARTIE D'UN CONTENANT D'EMBALLAGE

(30) Priority: 05.07.2006 SE 0601469
(43) Date of publication of application: 01.04.2009
(73) Proprietor: Tetra Laval Holdings & Finance S.A., 1009 Pully (CH)
(72) Inventor: ANDRÉASON, Ingmar, 241 31 Eslöv (SE); ANDERSSON, Pär, 227 38 Lund (SE); TUVESSON, Joakim, 214 22 MALMÖ (SE); MÅNSSON, Patrik, 245 41 Staffanstorp (SE)
(74) Representative: Tetra Pak - Patent Attorneys SE
(86) International application number: PCT/SE2007/000586
(87) International publication number: WO 2008/004932

(56) References cited:
- EP-A1- 1 568 459
- EP-A1- 1 676 688
- WO-A1-97/46362
- JP-A- 62 051 423
- US-A- 4 518 554
- US-A- 4 518 554
- US-A- 5 667 745
- US-A- 5 690 880
- US-B1- 6 258 312

## Description

### TECHNICAL FIELD

The present invention relates to a method for injection moulding a thermoplastic packaging container portion connecting to an opening device and to an end portion of a packaging container body.

### BACKGROUND OF THE INVENTION

The present invention is developed to be used during injection moulding of thermoplastic packaging container portions directly onto other packaging container portions, for instance during injection moulding of a packaging container top to a sleeve of packaging laminate and a thermoplastic opening device in the form of a screw cap. The result is a packaging container in which food is packed. The applicant is marketing similar types of packaging containers under the trade names Tetra Top@ and Tetra Aptiva®.

The injection moulding is performed in a packaging machine, and during production of an above mentioned packaging container a flat-laid, tubeformed blank of packaging laminate is erected and sealed in one of its ends by injection moulding a thermoplastic top directly onto the end portion. The top comprises a pour opening which is defined by a neck having external threads engagable with internal threads of a screw cap for sealing the pour opening. The cap is positioned in a mould cavity and the neck with the pour opening is thereby injection moulded directly in the cap.

The cycle time for injection moulding made in a packaging machine is very short compared to conventional injection moulding. Typically, the cycle time for manufacturing a top should not be longer than 1 second. It is necessary for maintaining a high capacity of the machine.

After the injection moulding the packaging container is conveyed with its open end directed upwards and is filled in a subsequent filling station. In some cases the packaging container is passed through one or several sterilisation stations before filling. After the filling the open end of the packaging container is folded and sealed.

The packaging container portions being injection moulded may be made from thin-walled material and to manufacture these it is for example possible to use the injection moulding technique described in for instance the U.S. patent document US 5,667,745 filed by the applicant.

The technology of using for example a screw cap as a part of the mould is known through the U.S. patent document US 4,518,554 which discloses the preambles of independent claims 1 and 14. Generally, the technology is called over-moulding.

However, to be able to manufacture a packaging container with a satisfactory quality of the seal between the top and the sleeve, and at the same time present good openability of the screw cap, it has been shown that the above described two technologies cannot be combined without making modifications.

It has been shown that the relative temperatures of the sleeve, the screw cap and the melt of plastic material play an important rol, both so that the sleeve is properly sealed to the top and also so that the screw cap will not stick so heavily to the top that an unreasonably large force will be needed from the consumer upon opening of the packaging container. Moreover, the temperatures are also important for the length of the cooling time needed, and thereby also for the possibility of achieving a short cycle time.

### SUMMARY OF THE INVENTION

The object of the present invention is to achieve a method of injection moulding a thermoplastic packaging container portion connecting with a thermoplastic opening device and connecting with an end portion of a packaging container body, the body comprising a thermoplastic material at least in an outer layer, which method provides for a satisfactory sealing between the body and the packaging container portion and satisfactory openability of the opening device, and which method may be used in a packaging machine with regard to demands on high capacity.

The above mentioned objects are realised by a method comprising the steps of arranging said end portion and at least a portion of said opening device in a cavity which is formed by bringing together an inner mould part and an outer mould part, provide a temperature difference between the opening device and the end portion so that said end portion attains a higher temperature than that of the opening device, inject into the cavity at least one melt of at least a first material, and bring the melt into contact with both said opening device and said end portion. To obtain a satisfactory sealing between two thermoplastic materials, for instance during sealing of two packaging laminates comprising polyethylene, it is normally necessary to heat both the laminates. Further, it has been shown that it is possible to obtain satisfactory sealing when injection moulding a packaging container portion directly onto a room-tempered sleeve of packaging laminate provided the melt that is injected has a temperature that, despite the cooling caused when the melt is brought into contact with the surface of the sleeve, is high enough to effect sealing. However, that temperature is considered too high to be suitable for injection moulding against an opening device, for example a screw cap, since the sealing provided is too strong. In particular, this is the case when injection moulding a packaging container portion to a screw cap made of the same thermoplastic material, or of thermoplastic materials from the same group, for instance the group of polyolefins (including both polypropylene and polyethylene). However, from for example material cost and recycling aspects it is desirable to be able to use thermoplastic material from the same group. Thus, by providing a temperature difference between the cap and the sleeve the problem may be solved. An additional aspect is the cycle time for the injection moulding and cooling which has a large impact on the capacity of the packaging machine. A high temperature of the plastic material melt necessitates a longer cooling time and/or more effective cooling. By the method of the invention the temperature of the thermoplastic melt may be held low.

A preferred embodiment comprises the step of maintaining, during injection of the melt, the mould parts in a first state in which the cavity has a first volume which is larger than the volume of the packaging container portion which is to be injection moulded, and pressing together the mould parts until the melt fills the entire cavity, which cavity thereby forms a second, smaller volume, so that the melt is brought into contact with both said opening device and said end portion of the body. In this way a thin-walled packaging container may be injection moulded in a controlled and effective way.

Another embodiment of the invention comprises the step of providing said temperature difference by heating the end portion. The temperature of the thermoplastic material melt is then chosen with respect to a temperature that would be suitable in relation to the opening device and for the adhesion between the parts. The end portion of the body is then heated to a temperature which, in relation to the temperature of the thermoplastic material melt, would be suitable for achieving a proper sealing between the packaging container portion and the end portion. This embodiment is very advantageous from an energy point of view. By heating the end portion the temperature of the thermoplastic material melt may be held low, which, as previously mentioned, provides for a short cooling time and thereby a better capacity of the packaging machine.

An embodiment comprises the step of heating by providing the inner mould part with means for generating heat in the end portion of the body. In that way the end portion may be easily heated to a chosen temperature.

Another embodiment comprises the step of providing said temperature difference by cooling at least the portion of the opening device being arranged to be brought into contact with the melt. The temperature of the thermoplastic material melt is then chosen with respect to a temperature that would be suitable in relation to the sealing between the packaging container portion and the end portion. The opening device is then cooled to a temperature which, in relation to the temperature of the thermoplastic material melt, would be suitable for achieving a reasonable adhesion between the opening device and the packaging container portion.

An embodiment comprises the step of cooling by providing the inner mould part with means for providing cooling in the vicinity of the opening device. In such a way the opening device may easily be cooled to a chosen temperature.

Another further embodiment comprises the step of providing said temperature difference by heating the end portion of the body and cooling the opening device. This is a combination of the two previously described embodiments and is suitable if it is desired to have a temperature of the thermoplastic material which is in between the most appropriate temperature for the opening device and the most appropriate temperature for the packaging container portion. Both heating and cooling may then be used.

Further embodiments are described in the dependent claims 8-13.

The invention further relates to a device according to claim 14 for injection moulding a thermoplastic packaging container portion connecting with a thermoplastic opening device and connecting with an end portion of a packaging container body which body comprises a thermoplastic material at least in an outer layer. Said device further comprises an inner and an outer mould part in between which a cavity for injection moulding is formed, which cavity is arranged to be able to receive at least said end portion of the body and at least a portion of said opening device so that these are brought into contact with the cavity, means for providing a temperature difference between the opening device and the end portion so that said end portion attains a higher temperature than that of the opening device, and means for injecting a melt of thermoplastic material into the cavity.

In an embodiment the inner mould part comprises means for generating heat in the end portion of the body.

An embodiment is characterised in that the means for generating heat is a heater with a surface arranged to bear against the end portion or against an area in the vicinity of the end portion in order to heat the end portion. This is a flexible and safe solution that is easily implemented in the packaging machine. If the packaging laminate includes aluminium foil, which is common due to the fact that many commercial materials comprises foil as a barrier against oxygen, it is possible to use it to transfer heat to the end portion although the portion is positioned in the cavity and is not in contact with any surfaces. If there is not any heat conductive material present the end portion may be heated before it is arranged in the cavity. If using a body in the form of a sleeve and an inner mould part in the form of a mandrel wheel arm onto which the sleeve is thread, the sleeve may be thread to a first position where the end portion is heated by a heater in the arm, and then subsequently be thread further on the arm into the cavity.

### BRIEF DESCRIPTION OF THE DRAWINGS

In the following the invention will be described in detailed with reference to presently preferred embodiments presented on the accompanying drawings, in which:
Figure 1 schematically shows a first embodiment in a view from the side of a packaging container comprising a packaging top which is manufactured according to the method of the invention,
Figure 2 schematically shows a cross sectional view of an embodiment of the device according to the invention, and
Figure 3 schematically shows four views (cross sectional and from above) of an alternative opening device and a corresponding packaging container top.

### DETAILED DESCRIPTION OF PREFERRED EMBODIMENTS

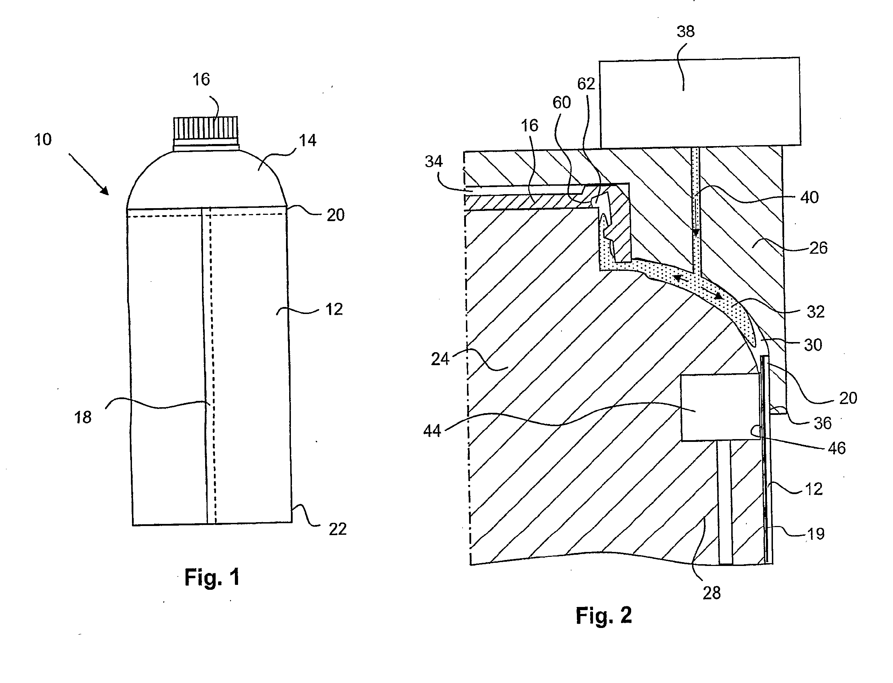

Figure 1 shows an example of a packaging container, in the following denoted 10. Said packaging container 10 comprises a body 12 in the form of a sleeve of packaging laminate and a thermoplastic packaging container portion in the form of a thin-walled top 14. The top 14 is arranged with a neck having a pour opening (not shown). This pour opening is provided with an opening device 16 in the form of a cap, which in this embodiment is a screw cap with threads on the inside which correspond to threads on the outer surface of the neck.

The sleeve 12 is manufactured in that two longitudinal edges of a packaging laminate blank are arranged to form an overlapping joint 18 which is sealed. The packaging laminate may be one of several types, but in general it comprises a core layer of paper or carton and one or several barrier layers of e.g. polymers or aluminium foil. In this embodiment the laminate comprises an outer layer of thermoplastic material at least on the side of the laminate facing the centre of the packaging container. Preferably, the material is polyethylene (PE) or polypropylene (PP), but other thermoplastic materials or combinations thereof may of course also be used.

Likewise, the laminate comprises a thin aluminium foil 19 (see Figure 2).

Initially, the sleeve 12 is open in its both axial ends. The top 14 is injection moulded directly on an end portion 20 of one of the ends using the method of the invention.

During the injection moulding the second end 22 of the sleeve is open. It is not sealed until sterilisation and product filling of the packaging container have been carried out.

As previously mentioned the top 14 is manufactured by injection moulding and comprises at least one material in the form of a base material, and possibly also a barrier material (which will not be described herein). Preferably, the base material is a thermoplastic material. For example, polypropylene (PP) and polyethylene (PE) may be used.

By way of introduction one way of carrying out the injection moulding will be described. Figure 2 shows an inner and an outer mould part 24, 26 in the form of mould tools. The inner tool 24 may be an end of an arm 28 of a mandrel wheel of the packaging machine, whilst the outer tool 26 is arranged to be pressed down towards the inner tool and surround the inner tool and a portion of the arm 28.

When the inner and the outer tools 24, 26 are brought together a cavity 30 is formed in between them in which the top will be formed. The tools 24, 26 have three main states. A first, open state, which is not shown, in which the outer tool is not arranged to surround the inner tool, but in which the sleeve 12 of packaging laminate is to be threaded onto the arm 28, and in which state the sleeve 12, after injection moulding of a top on said sleeve 12, is to be removed from the arm 28. The sleeve 12 is provided to the inner tool 24 in such a way that the end portion 20 will be positioned in the cavity when the tools 24, 26 are brought together. Figure 2 shows a second, almost closed state, in which the outer tool 26 surrounds the inner tool 24, but in which the cavity 30 between the inner and outer tools 24, 26 has a first volume which is larger than the volume of the top 14 which is to be injection moulded. In this state a melt 32 of plastic material is injected into the cavity, but the volume of the melt is not as large as the present volume of the cavity. In a third state, which is not shown, the outer tool 26 is pressed down towards the inner tool 24 until the injected melt is forced out in the cavity and is brought into contact with the end portion 20 of the sleeve 12. Upon compression the cavity 30 attains a second, smaller volume, which volume essentially corresponds to the volume of the thin-walled top 14. The outer and inner tools 24, 26 are shaped so that they not reach each others bottom ends in the third state. The outer tool 26 may instead, if needed, be pressed further towards the inner tool 24. This is used during the solidification and cooling phase before the tools 24, 26 are opened. Although the packaging container portion 14 shrinks during cooling the outer tool 26 will be able to continue pressing against the portion, and by means of the maintained contact between the portion 14 and the outer tool 26 a more effective cooling is obtained.

The top is not only injection moulded on the end portion 20 of the sleeve, but also towards a cap 16. The cap 16 together with the inner tool 24 form a space in an end portion 34 of the cavity 30, which space is arranged to form a neck on the top 14. The neck constitutes the edge of the previously mentioned pour opening. In this embodiment the pour opening is formed in the end of the top 14 which is arranged furthest away from the sleeve 12. Thus, the cap 16 is placed on the outer end of the inner tool 24. It can be seen in the Figure that the inner tool 24, at the neck, has a smaller diameter than the inner diameter of the cap 16 and that the neck will be formed between the inner tool 24 and the inner envelope surface of the cap. The outer tool 26 will bear against the outer envelope surface of the cap 16 and partly against the upper circular surface of the cap 16. The cap is pre-manufactured using conventional injection moulding, and is supplied to the packaging machine in a ready-to-use state. Preferably, the material in the cap is polyethylene (PE) or polypropylene (PP). Other thermoplastic materials or combinations thereof are of course also possible to use.

In order for the end portion 20 of the sleeve to be arranged in the cavity 30 between the outer and inner tools 24, 26 there is an opening 36 through which the end portion 20 is arranged to extend. In the open state the sleeve 12 is arranged on the arm 28 in such a way that the end portion 20 will extend over the inner tool in the end of the arm 28. Thus, when the outer tool 26 surrounds the inner tool 24 and a portion of the arm 28, the sleeve 12 will be tightly held and its end portion 20 will be positioned in the cavity 30.

The thermoplastic melt is prepared and is injected in the cavity 30 by means of a suitable device, e.g. a conventional injection moulding extruder. A box with the reference numeral 38 indicates the device in the Figure. An inlet channel 40 for the melt of thermoplastic material is provided in the outer tool 26, between said device 38 and the cavity 30. In the Figure only one channel 40 is shown, but preferably there is provided a number of channels to the cavity 30. Heaters (not shown), preferably electric heaters, are provided around the inlet channels 40 to make sure that the melt in the channels is not cooled down and solidified, but is kept in melted form.

The amount of material injected, the number and position of the injection points 40 and the volume difference between the almost closed and the closed cavity 30 must be adapted to each other so that the material will be able to flow sufficiently into the geometry of the top.

The inner tool 24 and the outer tool 26 are both provided with several cooling channels (not shown) for cooling the tools and thereby also the packaging container portion 14. In the channels cold water are conducted, and in the described embodiment the cooling channels make sure that the temperature of the tools are approximately the same as room temperature, i.e. approximately 20°C.

In Figure 2 the inner mould tool 24 is provided with a heater 44, preferably an electric heater, for heating the sleeve 12. The heater 44 is positioned with a contact surface 46 arranged to be in contact with the inside of the sleeve 12. The heater 44 is not in direct contact with the end portion 20 of the sleeve 12, but because of the aluminium foil 19 in the thin laminate a quick heat transfer out to the end portion 20 is obtained, and the end portion 20 is heated. Preferably, the heating is made immediately before the melt 32 is injected in the cavity 30.

In an embodiment the thermoplastic material melt 32 has a temperature principally in the interval of 160-210°C when it is injected into the cavity 30. The mould tools 24, 26 are kept at a temperature of approximately 20°C and the cap 16 has approximately the same temperature. The heater is kept at a temperature principally in the interval of 50-70°C. The heat transfer via the aluminium foil 19 heats the end portion 20 to approximately the same temperature, i.e. to a temperature principally in the interval of 50-70°C. Thus, the temperature difference between the cap 16 and the sleeve 12 is, in this example, in the range of 30-50°C. However, it should be realised that the invention is not limited to the temperatures stated. The temperature difference needs to be adapted for each application, and is dependent on a number of factors such as for example the chosen temperature of the thermoplastic material melt 32, choice of material, the thickness of the material, choice of heating or cooling devices and their placement, cycle time, the temperature of the mould tool etc.

In an alternative embodiment the packaging laminate also comprises an aluminium foil 19 and an electrical inductor is used for heating the end portion 20 of the sleeve 12. An electrical pulse is provided immediately before the melt 32 is injected, and the pulse generates heat in the aluminium foil 19 which in turn heats the end portion 20. The placement of the inductor may be the same as the placement of the electrical heater 44. In an alternative embodiment the inductor is placed on the outside of the sleeve. In a further embodiment the inductor, that is placed on the outside of the sleeve, may be cooperating with a metal device provided in the surface of the inner mould tool 24. Advantageously, such metal device is provided partly encapsulated in an insulating material, i.e. the metal device is inserted in the inner mould tool in an insulating material. Only the surface arranged to be in contact with the sleeve is free from insulating material. The metal device, which has a larger thickness than the aluminium foil of the sleeve, and thereby reacts slower upon exposure to electrical pulses, makes it easier to achieve the chosen temperature.

In another embodiment the packaging laminate does not comprise aluminium foil. The heating of the end portion 20 may than be achieved by arranging the end portion 20 in a first position principally outside the cavity 30 to heat it, and subsequently arrange the end portion 20 in a second position in which it is situated inside the cavity 30. Thus, the heater 44 may be placed as shown in Figure 2, but the sleeve 12 is thread on the inner mould tool 24 to a position in which the end portion 20 is on a level with the heater 44. Heating is then made directly on the end portion 20, and immediately before the thermoplastic material melt is injected into the cavity 30 the sleeve 12 is transferred further along the inner mould tool 24 in a direction towards the cavity 30 so that the end portion 20 is passed through the opening 36 and brought to its final position inside the cavity 30.

In another embodiment the end portion 20 is heated by hot air.

Further, in other embodiments, the heater 44 or the inductor may be placed in the outer mould tool 26. Whichever is the most appropriate depends on the structure of the packaging laminate, i.e. the placement of the aluminium layer 19 and the paper layer. Paper conducts heat poorly, which makes it less effective to heat towards that side of the laminate compared to the side with the aluminium foil.

In the above embodiments it has been described how the sleeve 12 may be heated. There are alternative embodiments where the temperature difference may be obtained by means of cooling at least the portion of the opening device 16 arranged to be in contact with the melt 32. The inner mould tool 24 is then provided with means for providing cooling in the vicinity of the opening device 16. The means may constitute channels for cooling water.

In another embodiment the temperature difference may be obtained by combining heating of the end portion 20 of the sleeve and cooling of the opening device 16. Then, combinations of the above described embodiments are possible.

It is obvious that the invention is not limited to the above described embodiments. Several variants and modifications are possible within the scope of the attached claims.

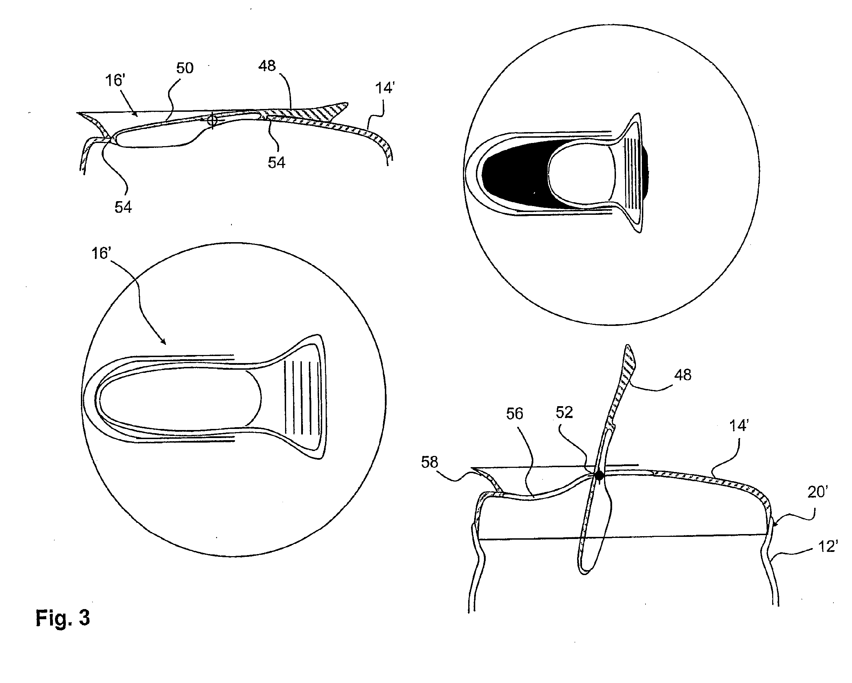

For example, an opening device 16 in the form of a screw cap has been described. However,it is obvious that a large number of different opening devices is possible to use. For example, the opening device may be used in connection with a foldable opening 16' of the kind shown in Figure 3. Said Figure shows a number of views of a packaging container body in the form of a sleeve 12' of packaging laminate and a packaging container portion in the form of a relatively flat top 14' injection moulded according to the method of the invention. The top is injection moulded on an end portion 20' of the sleeve 12' in the same way as have been previously described. The foldable opening 16' comprises an operation portion 48 and a sealing portion 50 which are fixedly connected to each other, but arranged one on each side of a pivot point 52. The sealing portion 50 has a contact surface 54 along its circumference to which the top 14' is injected. When the opening device 16' is opened, by means of lifting the operation portion 48 so that the sealing portion 50 is pressed downwards and into the packaging container, a pour opening 56 is formed where the sealing portion 50 was situated. The edge of the pour opening 56 is tapered outwards in a direction into the packaging container so that the sealing portion 50 can be pushed into the packaging container. The area around the pour opening 56 may be provided with a pouring spout 58. When manufacturing a packaging container portion having an opening device of this type the shrinkage of the thermoplastic material upon cooling is used to create a considerable tightness between the sealing portion 50 and the packaging container portion 14'. After the injection moulding the packaging container portion 14' will surround the sealing portion 50 in that it will bear against the contact surface 54. When the packaging container portion 14' is then cooling down, preferably by means of active cooling, the packaging container portion will shrink, i.e. it contracts. As a result the packaging container portion 14' will be pressed against the contact surface 54, i.e. the packaging container portion 14' will effect a clamping force onto the sealing portion 50. Correspondingly, in the previously described embodiment, considerable tightness is created between the neck of the packaging container portion 14 and the screw cap 16 in that the screw cap 16 comprises a flange portion 60 to which a shoulder portion 62 of the packaging container portion is created. The flange portion 60 and the corresponding shoulder portion 62 extend along the entire circumference of the screw cap 16 and the packaging container portion 14 respectively. During the injection the melt of the packaging container portion will come into contact with the flange portion 60 and when the melt starts to cool down, and starts to shrink, the shoulder portion 62 of the neck will be contracted towards the centre of the neck, and thus the neck will be clamped around the flange portion 60 of the screw cap 16.

The packaging container portion which has been described herein has the shape of a packaging container top. However, it is obvious that the top may be shaped as another type of packaging container portion, for example a side surface, a flat top portion, a lid or similar portion. If the packaging container portion has the shape of an at least partly flat top portion the cavity may be provided with a lid of which a portion, through the injection moulding, is sealed to the packaging container portion and constitutes a hinge. When the lid is pivoted a pour opening is formed in the flat top portion. Such an embodiment is relatively similar to the previously described foldable opening 16'.

Further, a body has been described being formed as a sleeve of packaging laminate comprising a core layer of paper. The body may of course be something else than a sleeve, it may have any shape as long as it comprises an end portion to which a packaging container portion of thermoplastic material may be injection moulded. Likewise, the packaging laminate may of course have another structure than the described. For example, the laminate may comprise one or several thermoplastic layers, i.e. without paper or aluminium foil.

It should also be understood that the parts included in the device, for instance the mould tools and the inlet channels, may be designed different from what has been shown.

## Claims

1. A method of injection moulding a thermoplastic packaging container portion (14, 14') connecting with a thermoplastic opening device (16, 16') and connecting with an end portion (20, 20') of a packaging container body (12, 12') which body comprises a thermoplastic material at least in an outer layer, comprising the steps of
arranging said end portion (20, 20') and at least a portion of said opening device (16, 16') in a cavity (30) which is formed by bringing together an inner mould art (24) and an outer mould part (26),
injecting into the cavity (30) at least one melt (32) of at least a first material,
bringing the melt (32) into contact with both said opening device (16, 16') and said end portion (20, 20'); **characterized in that** the method comprises the step of providing a temperature difference between the opening device (16, 16') and the end portion (20, 20') so that said end portion (20, 20') attains a higher temperature than that of the opening device (16, 16').

2. Method according to claim 1, comprising the step of maintaining, during injection of the melt (32), the mould parts (24, 26) in a first state in which the cavity (30) has a first volume which is larger than the volume of the packaging container portion (14, 14') which is to be injection moulded, and
pressing together the mould parts (24, 26) until the melt (32) fills the entire cavity (30), which cavity (30) thereby forms a second, smaller volume, so that the melt (32) is brought into contact with both said opening device (16, 16') and said end portion (20, 20') of the body (12, 12').

3. Method according to any of the preceding claim, comprising the step of providing said temperature difference by heating the end portion (20, 20').

4. Method according to claim 3, comprising the step of heating by providing the inner mould part (24) with means for generating heat in the end portion (20, 20') of the body (12, 12').

5. Method according to claim 1 or 2, comprising the step of providing said temperature difference by cooling at least the portion of the opening device (16, 16') being arranged to be brought into contact with the melt (32).

6. Method according to claim 5, comprising the step of cooling by providing the inner mould part (24) with means for providing cooling in the vicinity of the opening device (16, 16').

7. Method according to any of the preceding claims, comprising the step of providing said temperature difference by heating the end portion (20, 20') of the body (12, 12') and cooling the opening device (16, 16').

8. Method according to any of the preceding claims, comprising the step of providing a temperature difference in the order of 30-50°C.

9. Method of any of the preceding claims, comprising the step of heating the end portion (20, 20') and providing melt (32) having a temperature in the interval of 160-210 °C when injected into the cavity (30).

10. Method according to any of the preceding claims, comprising the step of injection moulding a packaging container portion (14, 14') onto a body (12, 12') in the form of a sleeve of packaging laminate.

11. Method according to claim 10, comprising the step of arranging the end portion (20, 20') of the sleeve (12, 12') in a first position principally outside the cavity (30) to heat it, and subsequently arrange the end portion (20, 20') in a second position in which it is situated inside the cavity (30).

12. Method according to any of the preceding claims, comprising the step of injection moulding a packaging container portion (14, 14') in the form of a packaging container top.

13. Method according to claim 12, comprising the step of arranging an opening device (16, 16') in the form of a cap in the cavity (30), which cap together with a portion of the inner mould part (24) is provided to form a neck of the packaging container top (14, 14'), which neck defines a pour opening.

14. Device for injection moulding a thermoplastic packaging container portion (14, 14') connecting with a thermoplastic opening device (16, 16') and connecting with an end portion (20, 20') of a packaging container body (12, 12') which body comprises a thermoplastic material at least in an outer layer,
an inner and an outer mould part (24, 26) in between which a cavity (30) for injection moulding is formed, which cavity (30) is arranged to be able to receive at least said end portion (20, 20') of the body (12, 12') and at least a portion of said opening device (16, 16') so that these are brought into contact with the cavity (30), and means for injecting a melt (32) of thermoplastic material into the cavity (30),
**characterised in that** the device further comprises
means for providing a temperature difference between the opening device (16, 16') and the end portion (20, 20') so that said end portion (20, 20') attains a higher temperature than that of the opening device (16; 16').

15. Device according to claim 14, **characterised in that** the inner mould part (24) comprises means for generating heat in the end portion (20, 20') of the body (12,12').

16. Device according to claim 15, **characterised in that** the means for generating heat is a heater (44) with a surface (46) arranged to bear against the end portion (20, 20') or against an area in the vicinity of the end portion (20, 20') in order to heat the end portion (20, 20').

## Patentansprüche

1. Verfahren zum Spritzgießen eines thermoplastischen Verpackungsbehälterabschnitts (14, 14') in Verbindung mit einer thermoplastischen Öffnungseinheit (16, 16') und in Verbindung mit einem Endabschnitt (20, 20') eines Verpackungsbehälterkörpers (12, 12'), welcher Körper wenigstens in einer äußeren Schicht ein thermoplastisches Material umfasst, umfassend die Schritte
Anordnen des Endabschnitts (20, 20') und wenigstens eines Abschnitts der Öffnungseinheit (16, 16') in einem Hohlraum (30), der durch Zusammenbringen eines inneren Formwerkzeugteils (24) und eines äußeren Formwerkzeugteils (26) gebildet wird,
Einspritzen wenigstens einer Schmelze (32) wenigstens eines ersten Materials in den Hohlraum (30),
Inkontaktbringen der Schmelze (32) sowohl mit der Öffnungseinheit (16, 16') als auch mit dem Endabschnitt (20, 20');
**dadurch gekennzeichnet, dass** das Verfahren den Schritt des Bereitstellens eines Temperaturunterschieds zwischen der Öffnungseinheit (16, 16') und dem Endabschnitt (20, 20') umfasst, so dass der Endabschnitt (20, 20') eine höhere Temperatur als der Öffnungsabschnitt (16, 16') erreicht.

2. Verfahren gemäß Anspruch 1, umfassend den Schritt, die Formwerkzeugteile (24, 26) während des Einspritzens der Schmelze (32) in einem ersten Zustand zu halten, wobei der Hohlraum (30) ein erstes Volumen aufweist, das größer als das Volumen des Verpackungsbehälterabschnitts (14, 14') ist, der spritzgegossen werden soll, und
Zusammenpressen der Formwerkzeugteile (24, 26), bis die Schmelze (32) den gesamten Hohlraum (30) füllt, welcher Hohlraum (30) dadurch ein zweites, kleineres Volumen bildet, so dass die Schmelze (32) sowohl mit der Öffnungseinheit (16, 16') als auch mit dem Endabschnitt (20, 20') des Körpers (12, 12') in Kontakt gebracht wird.

3. Verfahren gemäß einem der vorstehenden Abschnitte, umfassend den Schritt des Bereitstellens des Temperaturunterschieds durch Erwärmen des Endabschnitts (20, 20').

4. Verfahren gemäß Anspruch 3, umfassend den Schritt des Erwärmens durch Versehen des inneren Formwerkzeugteils (24) mit Mitteln zum Erzeugen von Wärme in dem Endabschnitt (20, 20') des Körpers (12, 12').

5. Verfahren gemäß Anspruch 1 oder 2, umfassend den Schritt des Bereitstellens des Temperaturunterschieds durch Kühlen wenigstens des Abschnitts der Öffnungseinheit (16, 16'), der angeordnet ist, um mit der Schmelze (32) in Kontakt gebracht zu werden.

6. Verfahren gemäß Anspruch 5, umfassend den Schritt des Kühlens durch Versehen des inneren Formwerkzeugteils (24) mit Mitteln zum Bereitstellen von Kühlung in der Nähe der Öffnungseinheit (16, 16').

7. Verfahren gemäß einem der vorstehenden Ansprüche, umfassend den Schritt des Bereitstellens des Temperaturunterschieds durch Erwärmen des Endabschnitts (20, 20') des Körpers (12, 12') und Kühlen der Öffnungseinheit (16, 16').

8. Verfahren gemäß einem der vorstehenden Ansprüche, umfassend den Schritt des Bereitstellens eines Temperaturunterschieds von etwa 30-50 °C.

9. Verfahren gemäß einem der vorstehenden Ansprüche, umfassend den Schritt des Erwärmens des Endabschnitts (20, 20') und Bereitstellen von Schmelze (32) mit einer Temperatur im Bereich von 160-210 °C bei Einspritzen in den Hohlraum (30).

10. Verfahren gemäß einem der vorstehenden Ansprüche, umfassend den Schritt des Spritzgießens eines Verpackungsbehälterabschnitts (14, 14') auf einen Körper (12, 12') in der Form eines Schlauchs aus Verpackungslaminat.

11. Verfahren gemäß Anspruch 10, umfassend den Schritt des Anordnens des Endabschnitts (20, 20') des Schlauchs (12, 12') in einer ersten Position hauptsächlich außerhalb des Hohlraums (30), um ihn zu erwärmen, und anschließend Anordnen des Endabschnitts (20, 20') in einer zweiten Position, in der er innerhalb des Hohlraums (30) angeordnet ist.

12. Verfahren gemäß einem der vorstehenden Ansprüche, umfassend den Schritt des Spritzgießens eines Verpackungsbehälterabschnitts (14, 14') in der Form eines Verpackungsbehälter-Oberteils.

13. Verfahren gemäß Anspruch 12, umfassend den Schritt des Anordnens einer Öffnungseinheit (16, 16') in der Form einer Kappe in dem Hohlraum (30), welche Kappe zusammen mit einem Abschnitt des inneren Formwerkzeugteils (24) bereitgestellt wird, um einen Hals des Verpackungsbehälter-Oberteils (14, 14') zu ergeben, welcher Hals eine Ausgussöffnung definiert.

14. Einheit zum Spritzgießen eines thermoplastischen Verpackungsbehälterabschnitts (14, 14') in Verbindung mit einer thermoplastischen Öffnungseinheit (16, 16') und in Verbindung mit einem Endabschnitt (20, 20') eines Verpackungsbehälterkörpers (12, 12'), welcher Körper wenigstens in einer äußeren Schicht ein thermoplastisches Material umfasst,
einen inneren und einen äußeren Formwerkzeugteil (24, 26), zwischen denen ein Hohlraum (30) zum Spritzgießen gebildet wird, welcher Hohlraum (30) angeordnet ist, um wenigstens den Endabschnitt (20, 20') des Körpers (12, 12') und wenigstens einen Abschnitt der Öffnungseinheit (16, 16') aufnehmen zu können, so dass diese in Kontakt mit dem Hohlraum (30) gebracht werden, und Mittel zum Einspritzen einer Schmelze (32) des thermoplastischen Materials in den Hohlraum (30),
**dadurch gekennzeichnet, dass** die Einheit ferner Mittel zum Bereitstellen eines Temperaturunterschieds zwischen der Öffnungseinheit (16, 16') und dem Endabschnitt (20, 20') umfasst, so dass der Endabschnitt (20, 20') eine höhere Temperatur als die Öffnungseinheit (16, 16') erreicht.

15. Einheit gemäß Anspruch 14, **dadurch gekennzeichnet, dass** der innere Formwerkzeugteil (24) Mittel zum Erzeugen von Wärme in dem Endabschnitt (20, 20') des Körpers (12, 12') umfasst.

16. Einheit gemäß Anspruch 15, **dadurch gekennzeichnet, dass** das Mittel zum Erzeugen von Wärme ein Heizer (44) mit einer Oberfläche (46) ist, die angeordnet ist, um gegen den Endabschnitt (20, 20') oder gegen eine Fläche in der Nähe des Endabschnitts (20, 20') zu drücken, um den Endabschnitt (20, 20') zu wärmen.

## Revendications

1. Procédé de moulage par injection d'une partie (14, 14') d'un contenant d'emballage thermoplastique se raccordant à un dispositif d'ouverture thermoplastique (16, 16') et se raccordant à une partie d'extrémité (20, 20') d'un corps de contenant d'emballage (12, 12'), lequel corps comprend un matériau thermoplastique au moins dans une couche externe, comprenant les étapes consistant à :
agencer ladite partie d'extrémité (20, 20') et au moins une partie dudit dispositif d'ouverture (16, 16') dans une cavité (30) qui est formée en rapprochant l'une de l'autre une partie interne (24) de moule et une partie externe (26) de moule, injecter dans la cavité (30) au moins une matière en fusion (32) d'au moins un premier matériau,
amener la matière en fusion (32) en contact à la fois avec ledit dispositif d'ouverture (16, 16') et ladite partie d'extrémité (20, 20') ;
**caractérisé en ce que** le procédé comprend l'étape consistant à fournir une différence de température entre le dispositif d'ouverture (16, 16') et la partie d'extrémité (20, 20') de telle sorte que ladite partie d'extrémité (20, 20') atteigne une température plus élevée que celle du dispositif d'ouverture (16, 16').

2. Procédé selon la revendication 1, comprenant l'étape consistant à maintenir, au cours de l'injection de la matière en fusion (32), les parties du moule (24, 26) dans un premier état dans lequel la cavité (30) présente un premier volume qui est plus grand que le volume de la partie de contenant d'emballage (14, 14') devant être moulée par injection, et
presser ensemble les parties du moule (24, 26) jusqu'à ce que la matière en fusion (32) remplisse la totalité de la cavité (30), laquelle cavité (30) formant ainsi un deuxième volume plus petit de telle sorte que la matière en fusion (32) soit amenée en contact à la fois avec ledit dispositif d'ouverture (16, 16') et ladite partie d'extrémité (20, 20') du corps (12, 12').

3. Procédé selon l'une quelconque des revendications précédentes, comprenant l'étape consistant à fournir ladite différence de température en chauffant la partie d'extrémité (20, 20').

4. Procédé selon la revendication 3, comprenant l'étape consistant à chauffer en fournissant à la partie interne du moule (24) un moyen pour générer de la chaleur dans la partie d'extrémité (20, 20') du corps (12, 12').

5. Procédé selon la revendication 1 ou 2, comprenant l'étape consistant à fournir ladite différence de température en refroidissant au moins la partie du dispositif d'ouverture (16, 16') qui est destinée à être amenée en contact avec la matière en fusion (32).

6. Procédé selon la revendication 5, comprenant l'étape consistant à refroidir en fournissant à la partie interne du moule (24) des moyens pour assurer un refroidissement à proximité du dispositif d'ouverture (16, 16').

7. Procédé selon l'une quelconque des revendications précédentes, comprenant l'étape consistant à fournir ladite différence de température en chauffant la partie d'extrémité (20, 20') du corps (12, 12') et en refroidissant le dispositif d'ouverture (16, 16').

8. Procédé selon l'une quelconque des revendications précédentes, comprenant l'étape consistant à fournir une différence de température de l'ordre de 30-50°C.

9. Procédé selon l'une quelconque des revendications précédentes, comprenant l'étape consistant à chauffer la partie d'extrémité (20, 20') et à fournir de la matière en fusion (32) à une température dans une plage de 160-210°C lorsqu'elle est injectée dans la cavité (30).

10. Procédé selon l'une quelconque des revendications précédentes, comprenant l'étape de moulage par injection d'une partie de contenant d'emballage (14, 14') sur un corps (12, 12') sous la forme d'un manchon de stratifié d'emballage.

11. Procédé selon la revendication 10, comprenant l'étape consistant à agencer la partie d'extrémité (20, 20') du manchon (12, 12') dans une première position principalement à l'extérieur de la cavité (30) pour la chauffer, et à agencer ensuite la partie d'extrémité (20, 20') dans une deuxième position dans laquelle elle est située à l'intérieur de la cavité (30).

12. Procédé selon l'une quelconque des revendications précédentes, comprenant l'étape consistant à mouler par injection une partie de contenant d'emballage (14, 14') sous la forme d'un dessus de contenant d'emballage.

13. Procédé selon la revendication 12, comprenant l'étape consistant à agencer un dispositif d'ouverture (16, 16') sous la forme d'un couvercle dans la cavité (30), lequel couvercle, conjointement avec une partie de la partie interne du moule (24), est prévu pour former un col du dessus de contenant d'emballage (14, 14'), lequel col définit une ouverture pour verser.

14. Dispositif de moulage par injection d'une partie de contenant d'emballage thermoplastique (14, 14') se raccordant à un dispositif d'ouverture thermoplastique (16, 16') et se raccordant à une partie d'extrémité (20, 20') d'un corps de contenant d'emballage (12, 12'), lequel corps comprend un matériau thermoplastique au moins dans une couche externe,
une partie interne et une partie externe du moule (24, 26) entre lesquelles est formée une cavité (30) pour le moulage par injection, laquelle cavité (30) est prévue de manière à pouvoir recevoir au moins ladite partie d'extrémité (20, 20') du corps (12, 12') et au moins une partie dudit dispositif d'ouverture (16, 16') de telle sorte que celles-ci soient amenées en contact avec la cavité (30), et un moyen pour injecter une matière en fusion (32) du matériau thermoplastique dans la cavité (30), **caractérisé en ce que** le dispositif comprend en outre
un moyen pour fournir une différence de température entre le dispositif d'ouverture (16, 16') et la partie d'extrémité (20, 20') de telle sorte que ladite partie d'extrémité (20, 20') atteigne une température plus élevée que celle du dispositif d'ouverture (16, 16').

15. Dispositif selon la revendication 14, **caractérisé en ce que** la partie interne du moule (24) comprend un moyen pour générer de la chaleur dans la partie d'extrémité (20, 20') du corps (12, 12').

16. Dispositif selon la revendication 15, **caractérisé en ce que** le moyen pour générer de la chaleur est un dispositif de chauffage (44) avec une surface (46) prévue pour presser contre la partie d'extrémité (20, 20') ou contre une zone à proximité de la partie d'extrémité (20, 20') afin de chauffer la partie d'extrémité (20, 20').
